# EUROPEAN PATENT APPLICATION

(11) **EP 4 780 087 A1**
(43) Date of publication of application: **22.07.2026**
(21) Application number: 26150712.3
(22) Date of filing: 08.01.2026
(51) Int. Cl.: H04W 52/02

(54) **SYSTEMS AND METHODS FOR SWITCH BACK MECHANISM FOR ULTRA-HIGH-RELIABILITY (UHR) FEATURES**

(30) Priority: 09.01.2025 IN 202521002006; 16.05.2025 US 202519210274
(71) Applicant: Avago Technologies International Sales Pte. Limited, Singapore 768923 (SG)
(72) Inventor: Verma, Sindhu, Irvine, 92618 (US); Adhikari, Shubhodeep, Irvine, 92618 (US)
(74) Representative: Dilg, Haeusler, Schindelmann Patentanwaltsgesellschaft mbH

(57) **Abstract**

A device includes a transmitter and one or more processors. The one or more processors may be configured to transmit, via the transmitter, a first frame initiating a transmit opportunity (TXOP) and instructing one or more devices receiving the first frame to switch from a first mode to a second mode, determine a duration to allow the one or more devices to switch from the second mode to the first mode, generate a second frame to indicate an end of the TXOP to the one or more devices, the second frame having padding based at least on the duration, and transmit, via the transmitter, the second frame.

## Description

### Field of the Disclosure

This disclosure generally relates to systems and methods for ending a transmit opportunity (TXOP) by a TXOP initiator using a TXOP end indication frame, such as for transitioning device to high capacity (HC) mode and where such frame carries padding for a duration that covers the switchback delay indicated by the TXOP responder.

### Background

The market for wireless communications devices has been growing due to increased use of portable devices, increased connectivity and data transfer between all manners of devices. Digital switching techniques have facilitated the large scale deployment of affordable, easy-to-use wireless communication networks. Wireless communication can operate in accordance with various standards, such as the IEEE 802.11x (e.g., Wi-Fi technology), Bluetooth, global system for mobile communications (GSM), code division multiple access (CDMA). Using such technologies, wireless communication devices can connect to local area networks and the internet without physical cables, communicating over radio frequencies and across various spaces and ranges.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2 is a frame sequence that does not include a switchback mechanism of the present disclosure.
FIG. 3 is a block diagram of an example frame sequence, according to one or more embodiments.
FIG. 4 is a flow diagram showing a process for switch back mechanism for ultra-high-reliability (UHR) features, in accordance with an embodiment.
FIG. 5 is a flow diagram showing a process for switch back mechanism for ultra-high-reliability (UHR) features, in accordance with an embodiment.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of systems and methods for a switch back mechanism for UHR features.

### A. COMPUTING AND NETWORK ENVIRONMENT

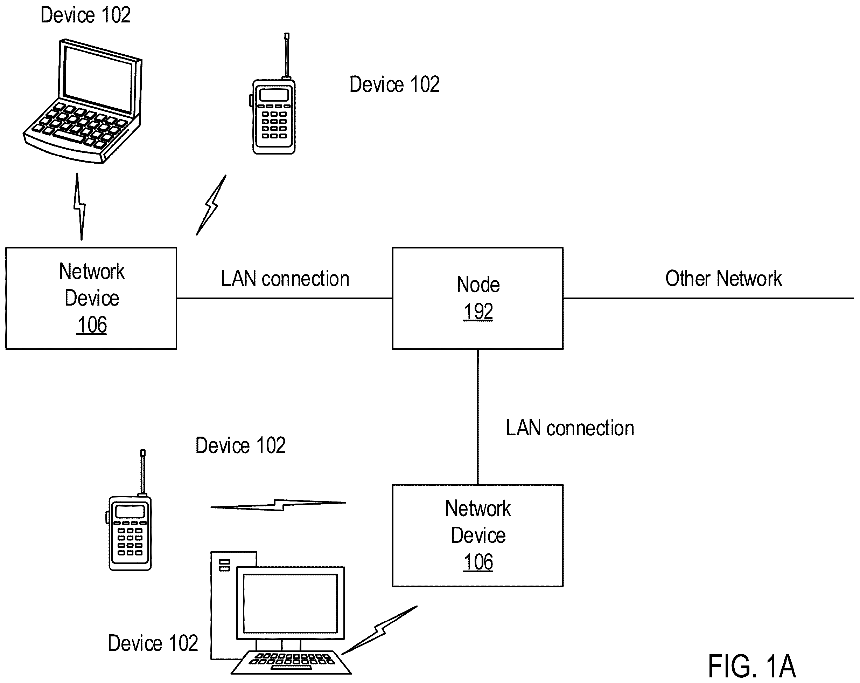

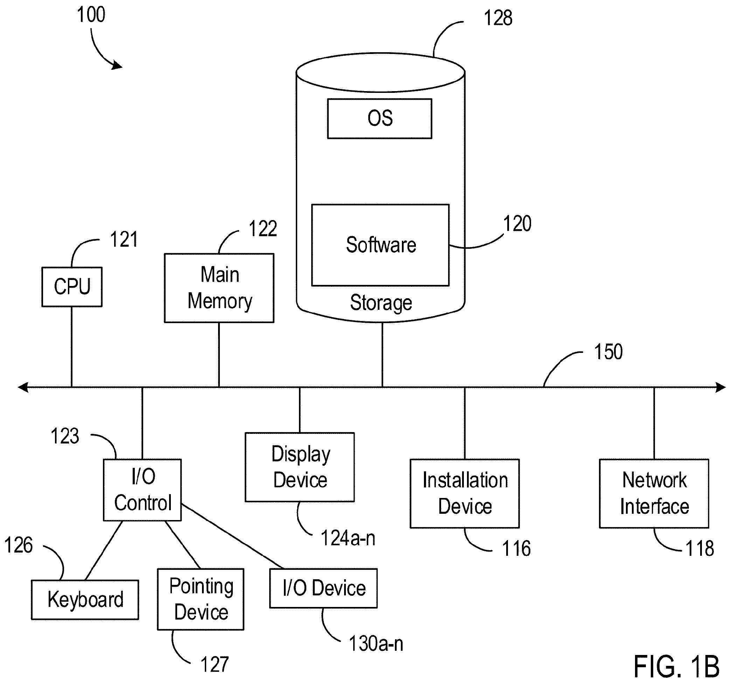

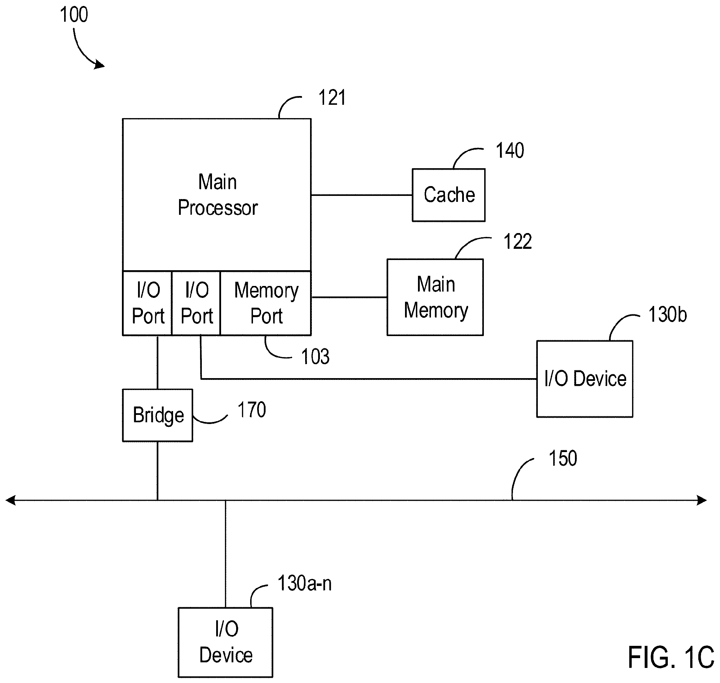

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. SWITCH BACK MECHANISM FOR ULTRA-HIGH-RELIABILITY (UHR) FEATURES

In ultra-high-reliability (UHR) wireless communications, several features, including dynamic power save (DPS), dynamic sub-band operation (DSO), non-primary channel access (NPCA), and enhanced multi-link single range (EMLSR) from extremely high throughput (EHT), enable high-performance operation in complex wireless environments. These features can improve throughput, reliability, and efficiency, particularly in maintaining a continuous and robust communication link. However, these features often introduce delays when transitioning between different operational modes or link states, during the initiation and termination of transmit opportunities (TXOPs), which can be referred to as "switching delays" and "switchback delays," respectively.

The switching delays occur at the beginning of a TXOP operation and are typically needed when the device switches to a different link, sub-band, or operational state, such as a higher transmission/reception (Tx/Rx) capability state. These delays are often provisioned through padding and intermediate frame check sequence (FCS) in initial control frame (ICF) process. In some cases, such as NPCA, these delays can also be managed through delayed initiation of operations. On the other hand, the switchback delays are incurred at the end of the TXOP operation, during which the device returns to its base state. These delays manifest as gaps in activity, during which no transmissions may take place. However, such gaps can lead to issues, such as ceding the medium to other devices in the network. Additionally, mismatches in the perceived duration of switchback delays between the access point (AP) and non-AP devices, due to the granularity of delay indications, can create unfair disparities in channel access opportunities, potentially disrupting the overall efficiency of the communication system (e.g., one side having a higher chance of channel access than the other).

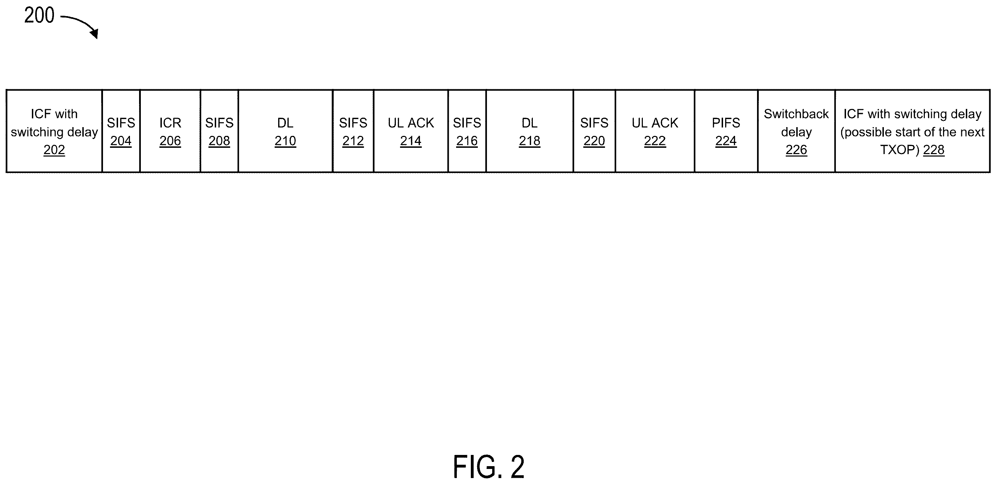

For example, referring to FIG. 2, shown is a frame sequence 200 that does not include a switchback mechanism of the present disclosure, including frames of ICF with switching delay 202, short interspace frame space (SIFS) 204, initial control frame response (ICR) 206, SIFS 208, downlink (DL) 210, SIFS 212, uplink acknowledgement (UL ACK) 214, SIFS 216, DL 218, SIFS 220, UL ACK 222, point coordination function interframe space (PIFS) 224, switchback delay 226, and ICF with switching delay 228. In the frame sequence 200, the ICF with switching delay 202 initiates a TXOP and serves as an initial control frame transmitted by a TXOP initiator. This frame includes padding to provision time for a TXOP responder to switch from a first mode (e.g., a baseline mode) to a second mode (e.g., a higher-capability operational mode, such as a different link or wider bandwidth). This switching period ensures that the responder is ready for full-rate communication by the end of the ICF. The SIFS 204 introduces a short interframe spacing interval between the end of ICF 202 and the next expected response. The ICR 206 is sent by the TXOP responder after the SIFS 204 and acknowledges the receipt of the ICF 202, signaling readiness to proceed with the scheduled data exchange. The SIFS 208 separates the ICR 206 from the next transmission, maintaining proper timing and allowing the TXOP initiator to prepare the first data frame. The DL 210 represents the first downlink data transmission from the TXOP initiator to the responder. This frame carries the payload, such as user data or control information. The SIFS 212 follows the DL 210 and precedes the UL ACK 214, which is an uplink acknowledgement sent by the responder to confirm receipt of the downlink frame. The use of the SIFS 212 ensures timely feedback with minimal delay. The SIFS 216 separates the UL ACK 214 from the next DL 218 transmission. The second downlink frame allows continued data transfer within the same TXOP. The SIFS 220 then introduces another short interframe space before the final UL ACK 222, which again acknowledges reception of the DL 218. After the UL ACK 222, the PIFS 224 is included. The PIFS 224 is longer than SIFSs and is interpreted by the responder as a potential end of the TXOP. Following the PIFS 224, the switchback delay 226 is passively introduced. During this period, the TXOP initiator remains silent to allow the responder time to return to the first mode (e.g., to the baseline mode, from a high-power state to a low-power state, or from an active sub-band to a monitoring state, etc.). However, this gap is not explicitly signaled and leads to inefficiencies, as the medium appears idle to other devices. Finally, the IFC with switching delay 228 marks the potential beginning of the next TXOP, starting a new cycle similar to the ICF with switching delay 202. Since the previous switchback delay 226 was not explicitly coordinated, the synchronization between the initiator and responder can be imperfect, increasing the risk of contention, medium inefficiency, or access imbalance.

As such, the frame sequence 200 lacks an indication that the TXOP has ended and that the responder is transitioning back to its base mode. As a result, the switchback delay is handled passively through a PIFS gap followed by a silent period, during which no transmission takes place. This leads to inefficient channel usage and potentially cedes the medium to other devices. Moreover, since the TXOP initiator cannot precisely anticipate the switchback duration of the responder, mismatches can occur due to delay indication granularity, leading to unfair access opportunities and reduced synchronization between the initiator and responder.

The present disclosure addresses the above-mentioned challenges by providing techniques for switch back mechanism for ultra-high-reliability (UHR) features. According to the present disclosure, the TXOP end indication frame enables the TXOP initiator to effectively signal the end of the TXOP in scenarios that involve transmissions to a DPS device requiring transition to a high capacity (HC) mode, and/or continuing DSO, NPAC, and EMLSR transmissions. By utilizing a TXOP end indication frame that incorporates padding, the techniques disclosed herein ensure that the padding duration matches the switchback delay for the TXOP responder, effectively facilitating a seamless switchback process. This eliminates the need for the responder to detect the end of the TXOP through the traditional PIFS gap-based operation, which would cause unnecessary delays and negatively impact channel access.

The techniques disclosed herein also can prevent the potential mismatch between the switchback delay incurred by the responder and the delay envisioned by the TXOP initiator due to the granularity of the delay indication. Such mismatches may favor one side over the other in terms of channel access. According to the present disclosure, the use of the TXOP end indication frame, with its padding provision, ensures that there are no unnecessary gaps in the medium, allowing both the TXOP initiator and responder to maintain fair and efficient channel access, while improving the overall synchronization and throughput of the network. The techniques disclosed herein ensure a more predictable and reliable switchback process, enhancing the fairness and efficiency of the wireless communication system especially in high-throughput and ultra-reliable contexts.

With the foregoing in mind, the figures and description below illustrate various examples of the techniques for switch back mechanism for UHR features. The figures and description below are non-limiting examples and can be implemented as any of various other configurations while remaining within the scope of the present disclosure. Other embodiments can be used in addition or instead. Details that can be apparent to a person of ordinary skill in the art may be omitted. Some embodiments can be practiced with additional components or steps and/or without all of the components or steps that are described.

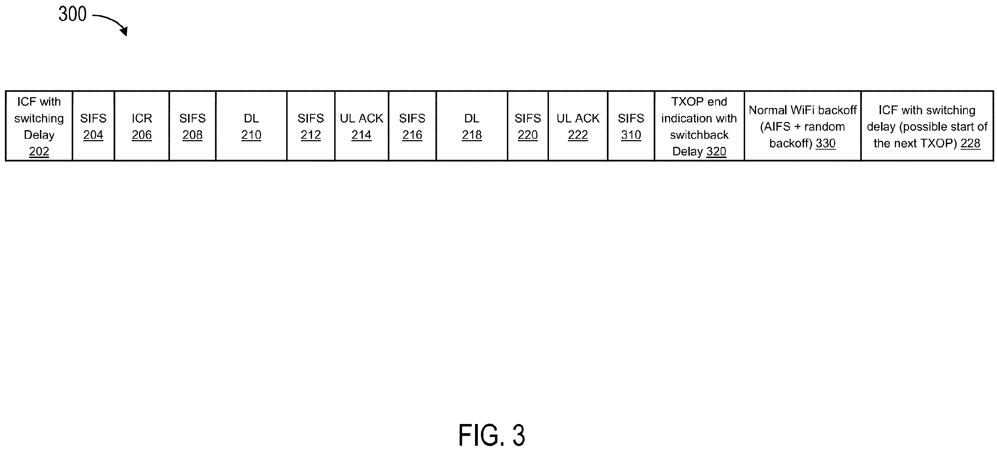

FIG. 3 is a block diagram of an example frame sequence 300, according to one or more embodiments. The frame sequence 300 may include "frames" of ICF with switching delay 202, short interspace frame space (SIFS) 204, initial control frame response (ICR) 206, SIFS 208, downlink (DL) 210, SIFS 212, uplink acknowledgement (UL ACK) 214, SIFS 216, DL 218, SIFS 220, UL ACK 222, SIFS 310, TXOP end indication with switchback delay 320, normal WiFi backoff 330, and ICF with switching delay 228. The "frame" as used herein may refer to a data frame, a control frame, a management frame, or any signal, packet, segment, or a formatted unit of transmission that can be generated, processed, transmitted, and/or received to facilitate communication between devices over a wireless medium.

The frame sequence 300 may be implemented by a "device" including a "transmitter" and one or more processors (e.g., the processor 121). The "device" as used herein may refer to an access point, a network device (e.g., the network device 106), a communication device (e.g., the communication device 102), or any device, circuitry, or system that can initiate a TXOP, manage communication protocols, and/or transmit wireless signals in accordance with the techniques described herein. The "transmitter" as used herein may refer to a radio frequency (RF) transmitter, an optical transmitter, a millimeter-wave transmitter, a baseband signal generator, or any device, circuitry, or system that can generate, encode, and transmit wireless signals over a communication medium. The transmitter may be configured to transmit at least one frame in the frame sequence 300 in accordance with a transmit opportunity (TXOP).

The processor may transmit, via the transmitter, a first frame initiating a TXOP. In some examples, the first frame may be the ICR 206, which may instruct one or more devices (sometimes referred to as a "receiving device") receiving the first frame to switch from a first "mode" to a second mode. The "receiving device" as used herein may refer to a station (STA), user equipment (UE), a wireless communication device (e.g., the wireless communication device 102), an access point operating in a responder role, a sensor node, an internet-of-things (IoT) endpoint, or any device, circuitry, or system that can detect, decode, and/or process the first frame. The "mode" as used herein may refer to a power state, a frequency band, a channel, a communication link, a capability level, or any operational configuration, status, or behavior that affects how a device transmits, receives, or otherwise participates in wireless communication. For example, the first mode and the second mode may indicate different power modes in which the receiving device operates (e.g., for dynamic power save (DPS)), different "channels" (or different sub-bands) on which the receiving device operates (e.g., for dynamic sub-band operation (DSO), non-primary channel access (NPCA), etc.), or different operational states. The "channel" as used herein may refer to a primary channel, a secondary channel, a bonded channel, a sub-band, a narrowband channel, a wideband channel, a licensed or unlicensed frequency band, or any portion of the wireless spectrum on which the device can transmit and/or the receiving device can receive signals. In some other examples, in which the device may be configured to communicate with the receiving device on a plurality of links, the first mode and the second mode may indicate different links, among the plurality of links, on which the receiving device communicates with the device. The "link" as used herein may refer to a wireless communication path, a logical interface, a physical connection, a frequency-domain or time-domain resource, or any channel, interface, or configuration that enables direct or indirect exchange of signals between two or more devices.

The processor may determine a duration to allow the receiving device to switch from the second mode to the first mode. The duration may correspond to a "switchback delay" during which the receiving device performs operations to return to the first mode (e.g., return to a lower-capability state, such as powering down, switching to a different channel, deactivating a link, or reconfiguring internal circuitry). The "duration" or "switchback delay" as used herein may refer to a time period, an interval, or a timing parameter that is for the receiving device to complete a transition from the second mode to the first mode and/or resume a baseline operation. In some examples, an amount of the duration may be pre-configured, negotiated during association, signaled via frame fields, and/or determined based on stored or received timing information. As discussed in greater detail below, the processor may generate a second frame (e.g., the TXOP end indication with switchback delay 320) based on the duration.

In some implementations, the processor may determine the duration based at least in part on information received from the receiving device, such as a timing indication exchanged during capability negotiation or feature enablement. For example, the processor may receive a third frame indicating a time amount for the receiving device to switch from the second mode to the first mode. The processor may determine, based at least on the time amount, the duration to allow the receiving device to switch from the second mode to the first mode. In other implementations, the duration may be locally determined by the initiating device based on known delay characteristics of the receiving device or based on conservative estimates to ensure reliable switchback. The determined duration may be used to generate one or more frames in the frame sequence 300, such as the TXOP end indication with switchback delay 320, which accounts for the switchback delay through appropriate padding as discussed in greater detail below. The "padding" as used herein may refer to one or more bits, symbols, null packets, dummy data units, MAC headers, physical-layer units, or any data or signal element inserted into a frame to extend the transmission time, occupy the channel, and/or align the timing of a transmission to satisfy protocol or timing constraints.

The processor may transmit a data frame (e.g., the DL 218) to the receiving device after transmitting the first frame. In response to transmitting the data frame, the processor may receive an acknowledgement frame (e.g., the UL ACK 222) from the receiving device. In response to receiving the acknowledgement frame, the processor may transmit the second frame (e.g., the TXOP end indication with switchback delay 320) to the receiving device. In some examples, a time interval (e.g., the SIFS 220) between the data frame and the acknowledgement frame may be the same as a time interval (e.g., the SIFS 310) between the acknowledgement frame and the second frame.

The processor may generate the second frame to indicate an end of the TXOP to the receiving device. In some examples, the second frame may correspond to the TXOP end indication with switchback delay 320 of the frame sequence 300. The second frame may include padding based at least on the duration (e.g., the duration determined for the receiving device to switch from the second mode to the first mode; the switchback delay). In some examples, the second frame may include one or more fields, subfields, or frame body portions that indicate no response is expected from the receiving device. The padding included in the second frame may be of a duration that substantially matches the switchback delay associated with the receiving device, allowing the switchback to occur seamlessly without unnecessary channel inactivity or contention.

In some examples, the second frame may be a non-High Throughput (non-HT) frame or a non-HT duplicate frame. For example, the second frame may be or include a frame that includes the padding to account for the switchback delay. The padding may include an intermediate frame check sequence (I-FCS) and medium access control (MAC) padding. The I-FCS may serve as a verification marker preceding the padding region, and the MAC padding may be formed from non-informational data that occupies the remaining transmission duration. This structure enables legacy or lower-capability devices to correctly interpret the frame termination while still allowing the initiating device to occupy the channel for the switchback delay. In other examples, the second frame may include an aggregated medium access control (MAC) protocol data unit (AMPDU). For example, the second frame may include the AMPDU in a physical layer (PHY) format corresponding to high throughput (HT), very high throughput (VHT), high efficiency (HE), extremely high throughput (EHT), ultra-high reliability (UHR), or any other WLAN environment. The padding may include one or more "null delimiters" towards an end of the AMPDU. As used herein, the "null delimiter" may refer to a delimiter field, symbol, control structure, or any signal element within an aggregated frame (e.g., the AMPDU) that indicates the presence of padding, signals, an intentionally unused segment, or designates a location where no valid MPDU is present, and may be used to extend transmission time or align frame timing without contributing substantive data. The AMPDU may serve to extend the effective duration of the transmission without introducing additional traffic. Alternatively or additionally, the padding may include MPDUs directed to devices that do not require switchback delays, thereby allowing efficient channel use while ensuring that the intended recipient of the switchback delay is afforded the time to return to the first mode.

The processor may transmit, via the transmitter, the second frame including the padding based on the duration. In some examples, the second frame may be transmitted following the final acknowledgement (e.g., the UL ACK 222) in the TXOP, and may be followed by the normal WiFi backoff 330, as shown in FIG. 3. By transmitting the second frame in this manner, the device may explicitly signal the conclusion of the TXOP while accommodating the receiving device's switchback operation through the embedded padding.

In some examples, the second frame may indicate the end of the TXOP to the receiving device, and enable the device to perform a random backoff upon completion of the transmission of the second frame. For instance, following the transmission of the second frame (e.g., the TXOP end indication with switchback delay 320), the device may initiate the normal WiFi backoff 330 as shown in the frame sequence 300 of FIG. 3. This random backoff may be performed in accordance with contention-based access protocols, such as those defined in IEEE 802.11, to determine when the device may next attempt to access the medium. The "random backoff" as used herein may refer to any time interval, a contention window, or a backoff mechanism used by a device to defer medium access, resolve channel contention, and/or comply with access fairness protocols following a transmission. By providing a clear indication of TXOP termination and initiating a random backoff, the device may prevent medium access conflicts and maintain synchronization with surrounding devices.

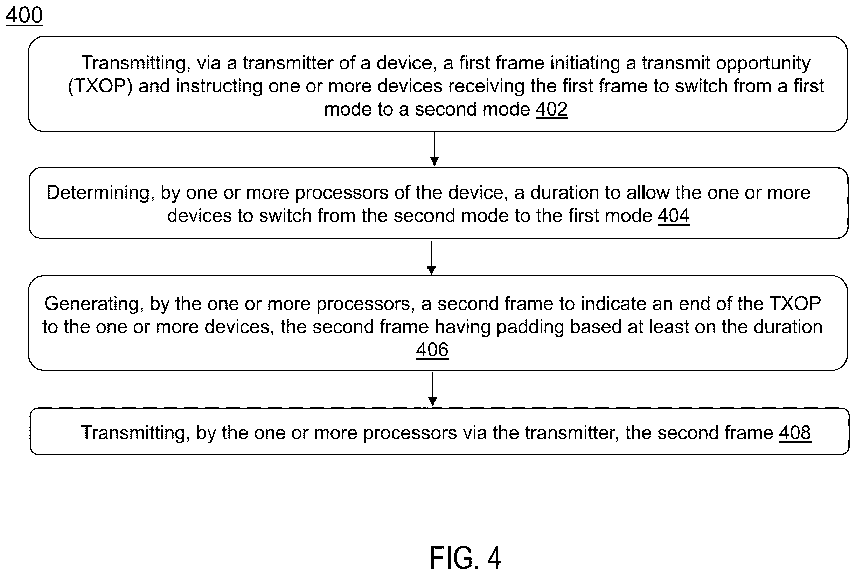

FIG. 4 is a flow diagram showing a process 400 for switch back mechanism for ultra-high-reliability (UHR) features, in accordance with an embodiment. In some embodiments, the process 400 is performed by one or more processors (e.g., the processor 121) of a device (e.g., the device 102, the network device 106, etc.). In other embodiments, the process 400 is performed by other entities. In some embodiments, the process 400 includes more, fewer, or different steps than shown in FIG. 4.

At step 402, the one or more processors may transmit, via a transmitter of the device, a first frame (e.g., the ICR 206) initiating a transmit opportunity (TXOP) and instructing one or more devices (e.g., the "receiving device") receiving the first frame to switch from a first mode to a second mode. In some examples, the first mode and the second mode may indicate different power modes in which the one or more devices can operate. In some examples, the first mode and the second mode indicate different channels on which the one or more devices can operate. In some examples, the first mode and the second mode may indicate different links, among a plurality of links on which the device communicates with the receiving device, on which the one or more devices can communicate with the device.

At step 404, the one or more processors may determine a duration to allow the one or more devices to switch from the second mode to the first mode. In some examples, the one or more processors may receive a frame indicating a time amount for the one or more devices to switch from the second mode to the first mode. The one or more processors may determine, based at least on the time amount, the duration to allow the one or more devices to switch from the second mode to the first mode.

At step 406, the one or more processors may generate a second frame (e.g., the TXOP end indication with switchback delay 320) to indicate an end of the TXOP to the one or more devices. The second frame may have padding based at least on the duration. In some examples, the second frame may be a non-High Throughput (non-HT) frame or a non-HT duplicate frame. The padding may include an intermediate frame check sequence (I-FCS) and medium access control (MAC) padding. In some examples, the second frame may include an aggregated medium access control (MAC) protocol data unit (AMPDU). The padding may include one or more null delimiters towards an end of the AMPDU. At step 408, the one or more processors may transmit, via the transmitter, the second frame.

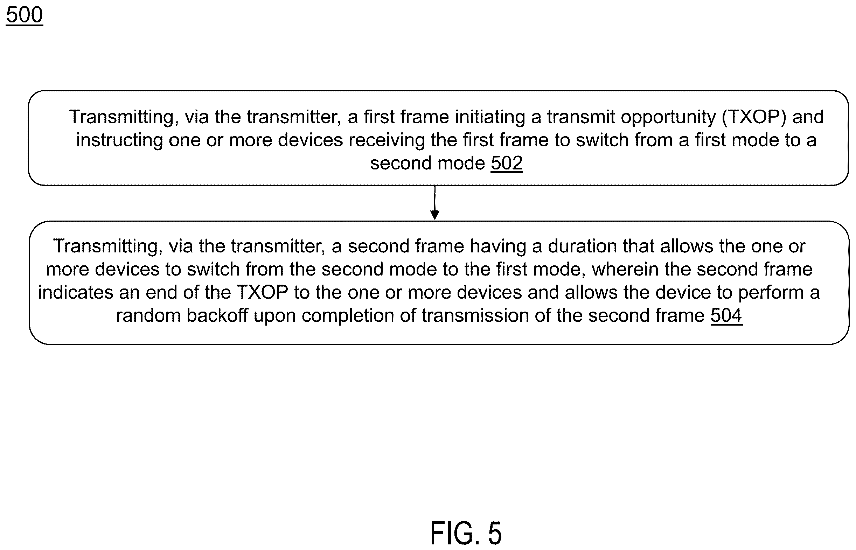

FIG. 5 is a flow diagram showing a process 500 for switch back mechanism for ultra-high-reliability (UHR) features, in accordance with an embodiment. In some embodiments, the process 500 is performed by one or more processors (e.g., the processor 121) of a device (e.g., the device 102, the network device 106, etc.). In other embodiments, the process 500 is performed by other entities. In some embodiments, the process 500 includes more, fewer, or different steps than shown in FIG. 5.

At step 502, the one or more processors may transmit, via the transmitter, a first frame (e.g., the ICR 206) initiating a transmit opportunity (TXOP) and instructing one or more devices (e.g., the "receiving device") receiving the first frame to switch from a first mode to a second mode. In some examples, the first mode and the second mode may indicate different power modes in which the one or more devices can operate. In some examples, the first mode and the second mode indicate different channels on which the one or more devices can operate. In some examples, the first mode and the second mode may indicate different links, among a plurality of links on which the device communicates with the receiving device, on which the one or more devices can communicate with the device.

At step 504, the one or more processors may transmit, via the transmitter, a second frame (e.g., the TXOP end indication with switchback delay 320) having a duration that allows the one or more devices to switch from the second mode to the first mode. The second frame may indicate an end of the TXOP to the one or more devices and allows the device to perform a random backoff upon completion of transmission of the second frame.

As discussed herein, the present disclosure provides techniques for managing switchback delays in ultra-high-reliability (UHR) wireless communication environments by enabling a transmitting device to explicitly indicate the end of a transmit opportunity (TXOP). In some embodiments, the techniques include generating and transmitting a second frame (e.g., a TXOP end indication frame) that includes padding based on a switchback delay duration required by the receiving device. The padding ensures time for the receiving device to return from a high-capability state (e.g., high-power mode, wideband mode, or active sub-band) to a baseline mode (e.g., low-power state or monitoring mode) without ceding the medium prematurely or causing desynchronization. These techniques can be used in conjunction with multiple UHR features such as dynamic power save (DPS), dynamic sub-band operation (DSO), non-primary channel access (NPCA), and enhanced multi-link single radio (EMLSR) operations.

Furthermore, the techniques disclosed herein may improve channel access fairness and synchronization by preventing medium access mismatches and reducing the risk of contention caused by ambiguous end-of-TXOP timing. In some embodiments, the second frame may be implemented using different frame formats, such as a non-high throughput (non-HT) frame or a non-HT duplicate frame including intermediate frame check sequence (I-FCS) and MAC padding, or an aggregated MAC protocol data unit (AMPDU) including null delimiters or additional MPDUs. After transmitting the second frame, the device may perform a random backoff procedure, such as a normal WiFi backoff (e.g., AIFS plus random backoff), to yield the channel in accordance with contention-based access rules. These techniques may be implemented in access points or stations (STAs) operating in compliance with IEEE 802.11 or other wireless standards and can be extended to environments supporting multi-link operations, beamforming, or coordinated spectrum reuse.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A method comprising:
transmitting, via a transmitter of a device, a first frame initiating a transmit opportunity, TXOP, and instructing one or more devices receiving the first frame to switch from a first mode to a second mode;
determining, by one or more processors of the device, a duration to allow the one or more devices to switch from the second mode to the first mode;
generating, by the one or more processors, a second frame to indicate an end of the TXOP to the one or more devices, the second frame having padding based at least on the duration; and
transmitting, by the one or more processors via the transmitter, the second frame.

2. The method of claim 1, wherein
the first mode and the second mode indicate different power modes in which the one or more devices can operate.

3. The method of claim 1 or 2, wherein
the first mode and the second mode indicate different channels on which the one or more devices can operate.

4. The method of any one of the preceding claims, further comprising:
communicating, by of the device, with the one or more devices on a plurality of links,
wherein the first mode and the second mode indicate different links, among the plurality of links, on which the one or more devices can communicate with the device.

5. The method of any one of the preceding claims, further comprising:
receiving a third frame indicating a time amount for the one or more devices to switch from the second mode to the first mode; and
determining, based at least on the time amount, the duration to allow the one or more devices to switch from the second mode to the first mode.

6. The method of any one of the preceding claims, wherein
the second frame is a non-High Throughput, non-HT, frame or a non-HT duplicate frame, and
the padding includes an intermediate frame check sequence, I-FCS, and medium access control (MAC) padding.

7. The method of any one of the preceding claims, wherein
the second frame includes an aggregated medium access control, MAC, protocol data unit ,AMPDU, and
the padding includes one or more null delimiters towards an end of the AMPDU.

8. A device comprising:
a transmitter; and
one or more processors; wherein the device is configured to control and/or carry out a method as set forth in any one of the preceding claims.

9. A device comprising:
a transmitter; and
one or more processors configured to:
transmit, via the transmitter, a first frame initiating a transmit opportunity, TXOP, and instructing one or more devices receiving the first frame to switch from a first mode to a second mode; and
transmit, via the transmitter, a second frame having a duration that allows the one or more devices to switch from the second mode to the first mode,
wherein the second frame indicates an end of the TXOP to the one or more devices and
allows the device to perform a random backoff upon completion of transmission of the second frame.

10. The device of claim 9, wherein
the first mode and the second mode indicate different power modes in which the one or more devices can operate.

11. The device of claim 9 or 10, wherein the first mode and the second mode indicate different channels on which the one or more devices can operate.

12. The device of any one of the preceding claims 9 to 11, wherein
the device is configured to communicate with the one or more devices on a plurality of links, and
the first mode and the second mode indicate different links, among the plurality of links, on which the one or more devices can communicate with the device.

13. The device of any one of the preceding claims 9 to 12, wherein the one or more processors are configured to:
receive a third frame indicating a time amount for the one or more devices to switch from the second mode to the first mode; and
determine, based at least on the time amount, the duration to allow the one or more devices to switch from the second mode to the first mode.

14. The device of any one of the preceding claims 9 to 13, wherein the one or more processors are configured to:
after transmitting the first frame, transmit a data frame to the one or more devices;
in response to transmitting the data frame, receive an acknowledgement frame from the one or more devices; and
in response to receiving the acknowledgement frame, transmit the second frame to the one or more devices,
wherein a time interval between the data frame and the acknowledgement frame is the same as a time interval between the acknowledgement frame and the second frame.
